# FASCICULE DE BREVET EUROPEEN

(11) **EP 1 614 924 B1**
(45) Date de publication et mention de la délivrance du brevet: **06.04.2011**
(21) Numéro de dépôt: 05014441.9
(22) Date de dépôt: 04.07.2005
(51) Int. Cl.: F16D 65/097

(54) **Frein à disque à étrier flottant comportant des moyens pour éviter la déformation de la chape lors des freinages**
Schwimmsattel-Scheibenbremse mit Mittel zum Vermeiden der Formveränderung des Bremsträgers während eines Bremsvorgangs
Floating caliper disc brake with means for preventing the deformation of the brake carrier during braking

(30) Priorité: 07.07.2004 FR 0407574
(43) Date de publication de la demande: 11.01.2006
(73) Titulaire: ROBERT BOSCH GMBH, 70442 Stuttgart (DE)
(72) Inventeur: Boisseau, Jean-Pierre, 75014 Paris (FR)
(74) Mandataire: Hurwic, Aleksander Wiktor

(56) Documents cités:
- DE-A1- 2 750 337
- DE-A1- 10 238 735
- FR-A- 2 747 751

## Description

L'invention concerne un frein à disque de véhicule automobile du type qui comporte un étrier coulissant.

L'invention concerne plus particulièrement un frein à disque de véhicule automobile, du type qui comporte une chape fixe dans laquelle sont montés coulissants axialement deux patins de frein interne et externe qui sont susceptibles d'être appliqués par un étrier de part et d'autre des faces opposées interne et externe d'un disque qui est monté tournant autour d'un axe, du type dans lequel l'étrier est monté coulissant axialement par rapport à la chape au moyen d'un premier et d'un second axes de guidage, ou "colonnettes", parallèles axiaux, du type dans lequel un pied interne de chaque axe de guidage est fixé à l'étrier et du type dans lequel l'extrémité libre externe de chaque axe de guidage est montée coulissante dans une première et une seconde glissière axiale associée de la chape fixe, la première et la seconde glissières étant agencées respectivement en amont et aval par rapport au sens de rotation du disque, et du type dans lequel les patins, lorsqu'ils sont appliqués contre les faces opposées du disque, exercent un effort transversal contre la seconde glissière, l'effort transversal étant transmis à la première glissière opposée par l'intermédiaire du premier axe de guidage associé, de l'étrier coulissant et du second axe de guidage associé.

On connaît de nombreux exemples de freins à disque de ce type décrit notamment dans DE 10238735 et DE 2750337.

Dans ce type de frein, l'effort transversal exercé par les patins sur la chape lors du freinage est transmis par la seconde glissière jusqu'au second axe de guidage associé à cette glissière. Ensuite, l'effort transversal est communiqué à l'étrier, puis à l'extrémité interne du premier axe de guidage associé à la première glissière. L'extrémité interne du premier axe de guidage appuie contre la première glissière. Le premier axe de guidage se déforme alors à la façon d'une poutre flexible encastrée, son extrémité externe appuie transversalement contre la première glissière selon un sens opposé à celui de la force transversale.

Ainsi, les forces qui s'exercent contre chacune des première et seconde glissières sont déséquilibrées et de sens contraire, ce qui a pour effet de déformer la chape fixe. La déformation de la chape a pour effet de fausser le parallélisme des glissières qui entrent alors en contact avec les axes de guidage, risquant ainsi de perturber le coulissement de l'étrier par rapport à la chape.

Or, de manière général, tout obstacle au coulissement entre l'étrier et les axes de guidage doit normalement être évité pour permettre le recul de l'étrier et, par suite, le recul des plaquettes par rapport au disque. En cas de résistance ou de grippage du coulissement de l'étrier, le(s) patin(s) de frein risquent de frotter sur le disque de frein.

De plus, la déformation de la chape est susceptible de provoquer, après plusieurs cycles de freinage, une fragilisation par fatigue de ladite chape fixe.

Afin de résoudre ces problèmes, l'invention propose donc un frein à disque du type décrit précédemment, caractérisé en ce que l'étrier coulissant comporte des moyens pour transmettre directement une partie de l'effort depuis la seconde glissière jusqu'à la première glissière pour éviter de déformer la chape fixe.

L'invention a principalement pour objet un frein à disque de véhicule automobile, du type qui comporte une chape fixe dans laquelle sont montés coulissants axialement deux patins de frein interne et externe qui sont susceptibles d'être appliqués par un étrier de part et d'autre des faces opposées interne et externe d'un disque qui est monté tournant autour d'un axe, du type dans lequel l'étrier est monté coulissant axialement par rapport à la chape au moyen d'un premier et d'un second axes de guidage parallèles axiaux, du type dans lequel un pied interne de chaque axe de guidage est fixé à l'étrier et du type dans lequel l'extrémité libre externe de chaque axe de guidage est montée coulissante dans une première et une seconde glissière axiale associée de la chape fixe , la première et la seconde glissières étant agencées respectivement en amont et aval par rapport au sens de rotation du disque, et du type dans lequel les patins, lorsqu'ils sont appliqués contre le disque, exercent un effort transversal contre la seconde glissière, l'effort étant transmis à la première glissière opposée par l'intermédiaire du premier axe de guidage associé, de l'étrier coulissant et du second axe de guidage associé,
caractérisé en ce que l'étrier coulissant comporte des moyens pour transmettre directement une partie de l'effort depuis la seconde glissière jusqu'à la première glissière pour répartir la déformation de la chape fixe.

L'invention a également pour objet un frein à disque, caractérisé en ce que l'étrier comporte à chacune de ses extrémités transversales au moins un premier ergot et un second ergot radiaux d'extrémité et qui sont destinés à coulisser axialement dans un premier rail axial et un second rail axial associés de la chape fixe.

L'invention a également pour objet un frein à disque caractérisé en ce que chaque rail est respectivement situé à proximité de la première glissière et de la seconde glissière.

L'invention a également pour objet un frein à disque, caractérisé en ce que les ergots sont agencés dans un plan commun, parallèle à la face externe du disque, voisin des extrémités libres des axes de guidage pour réduire les efforts s'exerçant sur l'extrémité libre externe de chaque axe de guidage.

L'invention a également pour objet un frein à disque, caractérisé en ce que les ergots sont montés coulissant dans les rails avec un jeu transversal

L'invention a également pour objet un frein à disque, caractérisé en ce que chaque rail comporte des moyens de rappel élastique de l'ergot associé vers une position centrée transversalement par rapport au rail.

L'invention a également pour objet un frein à disque, caractérisé en ce que les moyens de rappel élastiques comportent des lames radiales élastiques qui sont interposées entre une paroi radiale du rail et l'ergot associé

L'invention a également pour objet un frein à disque, caractérisé en ce que les patins sont guidés en coulissement par rapport à la chape fixe par l'intermédiaire de lames élastiques conformées en coulisses axiales, et en ce que chaque moyen de rappel élastique est réalisé venu de matière avec ladite coulisse de patin associée.

D'autres caractéristiques et avantages de l'invention apparaîtront au cours de la lecture de la description détaillée qui va suivre pour la compréhension de laquelle on se reportera aux dessins annexés, parmi lesquels :
- la figure 1 est une vue en perspective éclatée qui représente schématiquement un frein à disque réalisé selon les enseignements de l'invention ;
- la figure 2 est une vue en perspective qui représente le frein à disque de la figure 1 ;
- la figure 3 est une vue en coupe transversale selon le plan "P3" de la figure 2 qui représente l'étrier monté coulissant axialement sur la chape du frein à disque ;
- la figure 4 est une vue en coupe selon le plan "P4" de la figure 3 qui représente notamment la transmission de l'efforts transversal exercé par les patins de freins, lorsqu'ils sont appliqués contre les faces du disque, depuis une seconde glissière de la chape jusqu'à une première glissière de la chape.

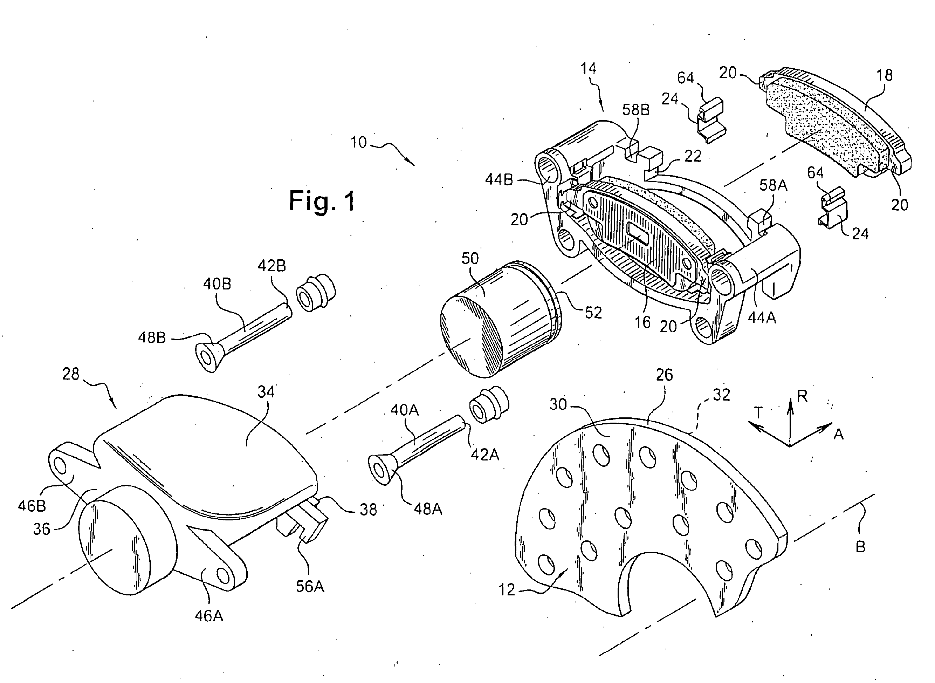

Dans la suite de la description, on adoptera à titre non limitatif une orientation axiale indiquée par la flèche "A" de la figure 1 qui est dirigée depuis l'intérieur vers l'extérieur selon la position du frein par rapport au véhicule automobile, une orientation transversale indiquée par la flèche "T" qui est dirigée de l'amont vers l'aval, et une orientation radiale indiquée par la flèche "R" qui est dirigée de bas en haut.

Par la suite, des éléments identiques, similaires ou analogues seront indiqués par des mêmes numéros de référence.

On a représenté à la figure 1 un frein à disque 10 de véhicule automobile.

De manière connue, le véhicule comporte un disque 12 qui est monté tournant autour de son axe "B" d'orientation axiale. Le disque 12 est lié en rotation à une roue qui lui est coaxiale. Le disque 12 tourne selon le sens amont/aval indiqué par la flèche T.

Le frein à disque 10 comporte une chape fixe 14 dans laquelle deux patins de frein interne 16 et externe 18 sont montés coulissant axialement.

De manière connue, chacune des extrémités transversales opposées 20 du patin 16, 18 est montée coulissante avec jeu dans une coulisse 22 associée de la chape 14 par l'intermédiaire d'un ressort à lame 24 interposé entre ladite extrémité transversale 20 et ladite coulisse associée 22.

Ce ressort 24 permet d'autoriser un degré déterminé de mouvement du patin 16, 18 dans la chape 14, c'est-à-dire, généralement mais de manière non limitative, un mouvement de coulissement transversal d'amont vers l'aval par rapport au mouvement de rotation du disque 12.

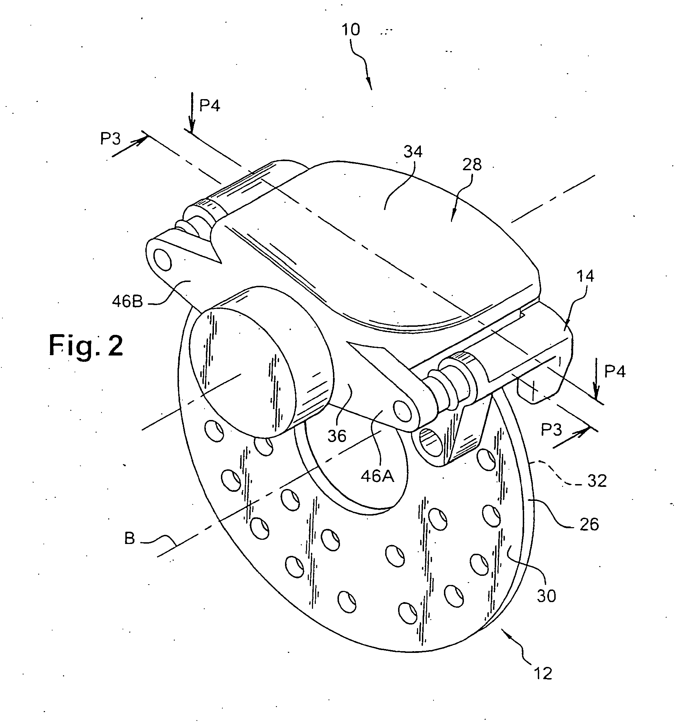

Comme représenté à la figure 2, la chape fixe 14 chevauche un bord périphérique 26 du disque 12.

Un étrier de frein 28 est susceptible de serrer chaque patin de frein interne 16 et externe 18 de part et d'autre des faces opposées interne 30 et externe 32 du disque 12.

De manière connue, l'étrier 28 comporte une voûte 34 qui s'étend axialement au-dessus de la chape 14 en la recouvrant. Deux ailes interne 36 et externe 38 s'étendent radialement depuis les bords d'extrémité interne et externe de la voûte 34 vers l'axe "B". La face interne de l'aile externe 38 est ainsi agencée en regard du patin externe 18, et la face externe de l'aile interne 36, en regard du patin interne 16.

L'étrier 28 est monté coulissant axialement par rapport à la chape fixe 14. A cet effet, l'étrier 28 comporte un premier 40A et un second 40B axes de guidage, respectivement amont et aval, parallèles d'orientation axiale dont les extrémités libres 42A, 42B externes sont respectivement reçues en coulissement dans une première 44A et une seconde 44B glissières axiales associées, respectivement amont et aval, de la chape 14. L'axe de guidage 40A, 40B est aussi appelé "colonnette".

Comme représenté à la figure 2, les première et seconde glissières axiales 44A, 44B s'étendent axialement au-dessus du bord périphérique 26 du disque 12, en encadrant latéralement les patins interne 16 et externe 18.

L'aile interne 36 de l'étrier 28 comporte ici une première 46A et une seconde 46B oreilles latérales de fixation sur lesquelles les pieds 48A, 48B d'extrémité externe des axes de guidage 40A, 40B sont destinés à être fixés. Les axes de guidage 40A, 40B encadrent ainsi transversalement la voûte 34 de l'étrier 28.

De manière connue, l'aile interne 36 de l'étrier 28 comporte au moins un piston 50 axial dont une extrémité d'appui externe 52 est susceptible de solliciter une face d'appui du patin interne 16 de frein pour serrer une face de friction opposée dudit patin interne 16 contre la face interne 30 du disque 12 lors d'un freinage.

Par réaction, l'étrier 28 coulisse axialement vers l'intérieur de façon que l'aile externe 38 sollicite une face d'appui du patin externe 18 de frein pour serrer une face de friction opposée dudit patin externe 18 contre la face externe 32 du disque 12.

Lorsque les patins 16, 18 sont ainsi appliqués contre les faces opposées 30, 32 du disque 12, ils coopèrent par friction avec le disque 12 qui les entraîne transversalement vers l'aval. Les patins 16, 18 exercent ainsi un effort transversal contre la seconde glissière 44B de la chape 14.

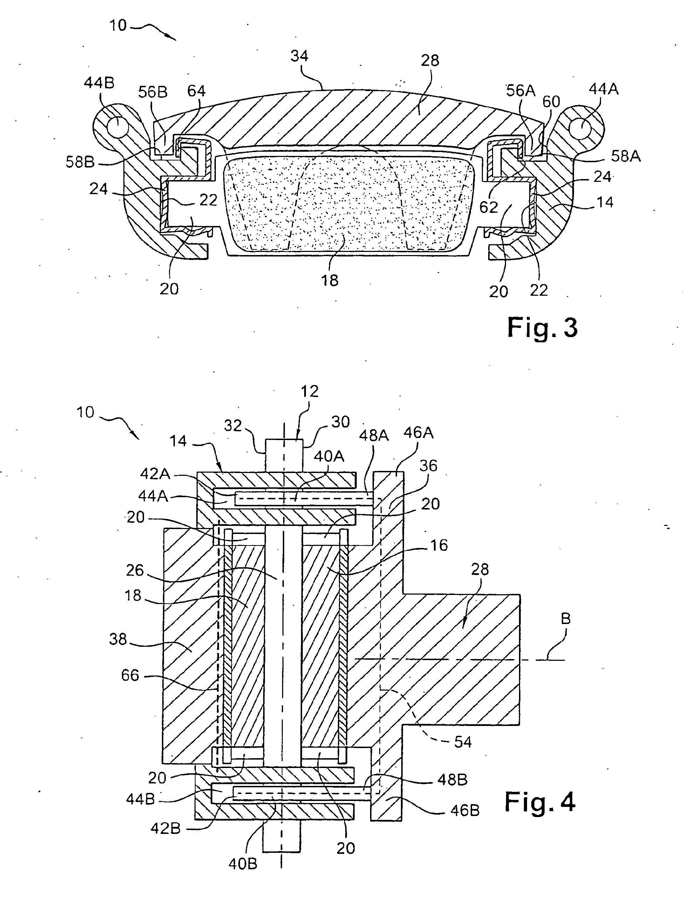

En se reportant à la figure 4, on décrit la transmission de l'effort transversal dans le frein à disque 10, qui est représentée en trait interrompu fin portant la référence 54. L'effort exercé contre la seconde glissière 44B est ainsi transmis à la première glissière 44A opposée par l'intermédiaire du second axe de guidage 40B associé, de l'étrier 28 coulissant, puis du premier axe de guidage 40A associé.

L'une des conséquences de cette transmission d'effort est qu'il se produit une déformation différentielle entre les deux axes de guidage 40A, 40B. Par exemple les axes de guidage 40A, 40B, qui ne sont fixés à l'étrier 28 que par leur pied 48A, 48B, se déforment transversalement en flexion à la façon d'une poutre encastrée, mais selon une amplitude et/ou une direction différente.

Selon les enseignements de l'invention, l'étrier 28 coulissant comporte des moyens pour transmettre directement, c'est-à-dire sans passer par les axes de guidage 40A, 40B, une partie de l'effort depuis la seconde glissière 44B jusqu'à la première glissière 44A pour répartir la déformation de la chape fixe 14 et ainsi maintenir le parallélisme des axes de guidage 40A, 40B.

Comme représenté aux figures 1 et 3, l'aile externe 38 de l'étrier 28 comporte à chacune de ses extrémités transversales au moins un premier 56A et un second 56B ergots, respectivement amont et aval, d'extrémité qui s'étendent radialement vers l'axe "B". Chaque ergot 56A, 56B est destiné à coulisser axialement dans un premier 58A et un second 58B rail axial, respectivement amont et aval, associé de la chape fixe 14.

Comme représenté à la figure 3, chaque rail axial 58A, 58B est agencé à proximité d'une des glissières 44A, 44B. Les rails axiaux 58A, 58B sont ici chacun agencés au dessus d'une des deux coulisses 22 du patin externe 18.

Les ergots 56A, 56B de l'étrier 28 sont agencés dans un plan commun, parallèle à la face externe 32 du disque 12, de manière que, lorsqu'ils sont reçus dans les rails 58A, 58B associés, les extrémités libres 42A, 42B des axes de guidage 40A, 40B soient situées au voisinage du plan commun. Le plan commun correspond ici au plan de coupe "P3" de la figure 2.

Chaque rail 58A, 58B a une section transversale en forme de "U" qui est limité transversalement par une première 60 et seconde 62 parois radiales, respectivement amont et aval, de façon à maintenir transversalement chaque ergot 56A, 56B à l'intérieur du rail 58A, 58B associé.

Pour faciliter le coulissement l'ergot 56A, 56B dans le rail 58A, 58B associé, l'ergot 56A, 56B est monté coulissant dans le rail 58A, 58B avec un jeu transversal.

Chaque rail 58A, 58B comporte des moyens de rappel élastique de l'ergot 56A, 56B associé vers une position centrée transversalement par rapport au rail 58A, 58B afin de maintenir un jeu transversal entre l'ergot 56A, 56B et chacune des parois 60, 62 du rail 58A, 58B.

Les moyens de rappel élastique comportent des lames radiales élastiques 64 qui sont interposés transversalement entre une des parois radiales 60, 62 du rail 58A, 58B et l'ergot 56A, 56B associé.

Selon le mode de réalisation représenté à la figure 3, chaque rail 58A, 58B comporte une lame élastique 64. Chaque rail 58A, 58B étant situé à proximité d'une coulisse de patin 22, il est ici possible de réaliser la lame élastique 64 venue de matière avec le ressort à lame 24 de la coulisse associée 22.

Ainsi, en se reportant à la figure 3, on voit que le ressort à lame 24 présente une forme de "S" dont la courbe inférieure épouse la forme de la coulisse 22, tandis que la courbe supérieure est conformée de manière que l'extrémité supérieure du "S" soit interposée entre la première paroi 60 du second rail 58B et le second ergot 56B, ou entre la seconde paroi 62 du premier rail 58A et le premier ergot 56A.

Lors du fonctionnement d'un tel frein à disque 10, lorsque les patins 16, 18 sont appliqués contre les faces opposées 30, 32 du disque 12, ils sont entraînés transversalement vers l'aval. Ils déforment les ressorts à lame 24 amont puis ils transmettent un effort transversal à la seconde glissière 44B.

La déformation transversale de la seconde glissière 44B entraîne la déformation transversale du second rail 58B. La première paroi 60 du second rail 58B est ainsi conduite en butée contre le second ergot 56B.

Simultanément, comme préalablement décrit dans le préambule, une partie de l'effort transversal appliqué contre la seconde glissière 44B par les patins 16, 18 est transmise à la première glissière 44A via les axes de guidage 40A, 40B et l'étrier 28 en suivant les traits interrompus fins 54 de la figure 4. La chape fixe 14 est donc déformée et, notamment, l'extrémité externe de la première glissière 44A est déformée transversalement vers l'amont.

Cette déformation de l'extrémité externe de la première glissière 44A amène la seconde paroi 62 du premier rail 58A au contact du premier ergot 56A. Les premier 56A et second 56B ergots étant chacun au contact de deux parois opposées 60, 62 par l'intermédiaires des lames élastiques 64, ils contiennent et limitent la déformation de la chape fixe 14. Une partie de l'effort transversal appliqué par les patins 16, 18 contre la seconde glissière 44B est communiquée directement à la seconde glissière 44B en passant par l'étrier 28 selon la direction du plan commun des ergots 56A, 56B, comme représenté en traits interrompus épais 66 à la figure 4.

Le frein à disque 10 réalisé selon les enseignements de l'invention permet donc de réduire sensiblement et de répartir de façon équilibrée la déformation de la chape fixe 14, et notamment de conserver les première 44A et seconde 44B glissières sensiblement parallèles. Les efforts s'exerçant sur l'extrémité libre externe 42A, 428 de chaque axe de guidage 40A, 40B sont ainsi sensiblement réduits.

Lorsque les patins 16, 18 ne sont plus appliqués sur les faces opposées 30, 32 du disque 12, l'étrier 28 doit pouvoir coulisser vers une position de repos. L'effort transversal des patins 16, 18 étant relâché, les ergots 56A, 56B sont rappelés vers une position centrée transversalement dans les rails 58A, 58B associés par les lames élastiques 64. Ainsi, les ergots 56A, 56B coulissent axialement sans frottement dans les rails 58A, 58B. Le mouvement de coulissement axial de l'étrier 28 n'est donc pas ralenti.

De préférence, l'ergot 56A, 56B a une longueur axiale suffisamment faible pour favoriser le coulissement de l'ergot 56A, 56B dans le rail 58A, 58B. L'ergot 56A, 56B doit cependant conserver une résistance à la déformation suffisante pour supporter l'effort transmis par les patins 16, 18 sans être déformé.

L'invention permet avantageusement d'équilibrer les forces qui s'exercent sur la chape 14, lorsque les patins de frein 18 sont appliqués de part et d'autre du disque 12, en transmettant une partie de l'effort transversal depuis la seconde glissière 44B jusqu'à la première glissière 44A directement via l'étrier 28, sans passer par les axes de guidage 40A, 40B. La chape 14 est ainsi peu, voire pas déformée, et les axes de guidage 40A, 40B demeurent sensiblement parallèles entre eux lors des freinage, ce qui favorise le coulissement axial de l'étrier 28 par rapport à la chape 14.

## Revendications

1. Frein à disque (10) de véhicule automobile, du type qui comporte une chape fixe (14) dans laquelle sont montés coulissants axialement deux patins de frein interne (16) et externe (18) qui sont susceptibles d'être appliqués par un étrier (28) de part et d'autre des faces opposées interne (30) et externe (32) d'un disque (12) qui est monté tournant autour d'un axe (B), du type dans lequel l'étrier (28) est monté coulissant axialement par rapport à la chape (14) au moyen d'un premier (40A) et d'un second (40B) axes de guidage parallèles axiaux, du type dans lequel un pied interne (48A, 48B) de chaque axe de guidage (40A, 40B) est fixé à l'étrier (28) et du type dans lequel l'extrémité libre externe (42A, 42B) de chaque axe de guidage (40A, 40B) est montée coulissante dans une première et une seconde glissière axiale (44A, 44B) associée de la chape fixe (14), la première (44A) et la seconde (44B) glissières étant agencées respectivement en amont et aval par rapport au sens (T) de rotation du disque (12), et du type dans lequel les patins (16, 18), lorsqu'ils sont appliqués contre le disque (12), exercent un effort transversal contre la seconde glissière (44B), l'effort étant transmis à la première glissière (44A) opposée par l'intermédiaire du premier axe de guidage (40B) associé, de l'étrier coulissant (28) et du second axe de guidage (40A) associé,
**caractérisé en ce que** l'étrier coulissant (28) comporte des moyens (56A, 56B, 58A, 58B) pour transmettre directement une partie de l'effort depuis la seconde glissière (44B) jusqu'à la première glissière (44A) pour répartir la déformation de la chape fixe (14).

2. Frein à disque (10) selon la revendication précédente, **caractérisé en ce que** l'étrier (28) comporte à chacune de ses extrémités transversales au moins un premier ergot (56A) et un second ergot (56B) radiaux d'extrémité et qui sont destinés à coulisser axialement dans un premier rail axial (58A) et un second rail axial (58B) associés de la chape fixe (14).

3. Frein à disque (10) selon la revendication précédente, **caractérisé en ce que** chaque rail (58A, 58B) est respectivement situé à proximité de la première glissière (44A) et de la seconde glissière (44B).

4. Frein à disque (10) selon l'une quelconque des revendications 2 ou 3, **caractérisé en ce que** les ergots (56A, 56B) sont agencés dans un plan commun (P3), parallèle à la face externe (32) du disque (12), voisin des extrémités libres (42A, 42B) des axes de guidage (40A, 40B) pour réduire les efforts s'exerçant sur l'extrémité libre externe (42A, 42B) de chaque axe de guidage (40A, 40B).

5. Frein à disque (10) selon l'une quelconque des revendications 2 à 4, **caractérisé en ce que** les ergots (56A, 56B) sont montés coulissant dans les rails (58A, 58B) avec un jeu transversal.

6. Frein à disque (10) selon la revendication précédente, **caractérisé en ce que** chaque rail (58A, 58B) comporte des moyens de rappel élastique (64) de l'ergot (56A, 56B) associé vers une position centrée transversalement par rapport au rail (58A, 58B).

7. Frein à disque (10) selon la revendication précédente, **caractérisé en ce que** les moyens de rappel élastiques comportent des lames (64) radiales élastiques qui sont interposées entre une paroi radiale (60, 62) du rail (58A, 58B) et l'ergot (56A, 56B) associé.

8. Frein à disque (10) selon la revendication précédente, **caractérisé en ce que** les patins (16, 18) sont guidés en coulissement par rapport à la chape fixe (14) par l'intermédiaire de lames élastiques (24) conformées en coulisses axiales, et **en ce que** chaque moyen de rappel élastique (64) est réalisé venu de matière avec ladite coulisse (24) de patin associée.

## Claims

1. Motor vehicle disc brake (10) of the type comprising a fixed carrier (14) in which are mounted such that they can slide axially two brake pads, one inboard (16) and one outboard (18), which can be applied by a caliper (28) on each side of the opposing inboard (30) and outboard (32) faces of a disc (12) which is mounted such that it can rotate about an axis (B), of the type in which the caliper (28) is mounted such that it can slide axially in relation to the carrier (14) by means of a first (40A) and of a second (40B) axial parallel guide pin, of the type in which an inboard foot (48A, 48B) of each guide pin (40A, 40B) is fixed to the caliper (28) and of the type in which the outboard free end (42A, 42B) of each guide pin (40A, 40B) is slidably mounted in a first and a second associated axial slideway (44A, 44B) of the fixed carrier (14), the first (44A) and second (44B) slideways being positioned respectively upstream and downstream in relation to the direction (T) of rotation of the disc (12), and of the type in which the pads (16, 18), when pressed against the disc (12), apply a transverse load against the second slideway (44B), the load being transmitted to the opposite first slideway (44A) via the associated first guide pin (40B), via the sliding caliper (28) and via the associated second guide pin (40A),
**characterized in that** the sliding caliper (28) comprises means (56A, 56B, 58A, 58B) for directly transmitting part of the load from the second slideway (44B) to the first slideway (44A) in order to distribute the deformation of the fixed carrier (14).

2. Disc brake (10) according to the preceding claim, **characterized in that** the caliper (28) comprises, at each of its transverse ends, at least one first radial end lug (56A) and one second radial end lug (56B) which lugs are intended to slide axially in an associated first axial rail (58A) and an associated second axial rail (58B) of the fixed carrier (14).

3. Disc brake (10) according to the preceding claim, **characterized in that** each rail (58A, 58B) is respectively situated near the first slideway (44A) and near the second slideway (44B).

4. Disc brake (10) according to either one of Claims 2 and 3, **characterized in that** the lugs (56A, 56B) are arranged in a common plane (P3) parallel to the outboard face (32) of the disc (12), near to the free ends (42A, 42B) of the guide pins (40A, 40B) in order to reduce the load applied to the outboard free end (42A, 42B) of each guide pin (40A, 40B).

5. Disc brake (10) according to any one of Claims 2 to 4, **characterized in that** the lugs (56A, 56B) are slidably mounted in the rails (58A, 58B) with transverse clearance.

6. Disc brake (10) according to the preceding claim, **characterized in that** each rail (58A, 58B) comprises elastic return means (64) for elastically returning the associated lug (56A, 56B) towards a transversely centred position in relation to the rail (58A, 58B).

7. Disc brake (10) according to the preceding claim, **characterized in that** the elastic return means comprise elastic radial leaves (64) which are interposed between a radial wall (60, 62) of the rail (58A, 58B) and the associated lug (56A, 56B).

8. Disc brake (10) according to the preceding claim, **characterized in that** the pads (16, 18) are guided in sliding in relation to the fixed carrier (14) via elastic leaves (24) shaped as axial sliders, and **in that** each elastic return means (64) is produced as an integral part of the said associated pad slider (24).

## Patentansprüche

1. Scheibenbremse (10) für Kraftfahrzeug, vom Typ, der einen festen Halter (14) aufweist, in welchem ein Innenbremsklotz (16) und ein Außenbremsklotz (18) axial verschiebbar angebracht sind, die von einem Sattel (28) gegen die zueinander entgegengesetzten Innen- (30) und Außenseite (30) einer Scheibe (12) gedrückt werden können, die um eine Achse (B) drehend angebracht ist, vom Typ, in welchem der Sattel (28) bezüglich des Halters (14) mittels einer axialen parallelen ersten Führungsachse (40A) und zweiten Führungsachse (40B), die parallel sind, axial verschiebbar ist, vom Typ in welchen ein Innenfuß (48A, 48B) jeder Führungsachse (40A, 40B) am Sattel (28) befestigt ist, und vom Typ, in welchem das frei Außenende (42A, 42B) jeder Führungsachse (40A, 40B) in einer ersten und zweiten axialen Führung (44A, 44B) gleitend angebracht sind, die dem festen Halters (14) zugeordnet sind, wobei die erste (44A) und zweite (44b) Führung aufwärts bzw. abwärts der Drehrichtung (T) der Scheibe (12) angeordnet ist, und vom Typ, in welchem die Bremsklötze (16, 18), wenn sie gegen die Scheibe angedrückt sind, eine Querkraft gegen die zweite Führung (44b) ausüben, wobei die Kraft auf die erste entgegengesetzte Führung (44A) über die erste zugeordnete Führungsachse (40B) und die zweite zugeordnete Führungsachse (40A) des verschiebbaren Sattels (28) übertragen wird,
**dadurch gekennzeichnet, dass** der verschiebbare Sattel (28) Mittel (56A, 56B, 58A, 58B) aufweist, um einen Teil der Kraft von der zweiten Führung (44B) zur ersten Führung (44A) direkt zu übertragen, um die Verformung des festen Halters (14) zu verteilen.

2. Scheibenbremse (10) nach dem vorhergehenden Anspruch, **dadurch gekennzeichnet, dass** der Sattel (28) an jedem seiner Querenden mindestens einen ersten (56A) und zweiten (56B) radialen Endvorsprung aufweist, die dazu bestimmt sind, axial in einer axialen ersten Schiene (58A) bzw. zweiten Schiene, die dem festen Halter (14) zugeordnet sind, zu gleiten.

3. Scheibenbremse (10) nach dem vorhergehenden Anspruch, **dadurch gekennzeichnet, dass** sich jede Schiene (58A, 58B) jeweils in der Nähe der ersten Führung (44A) bzw. der zweiten Führung (44B) befindet.

4. Scheibenbremse (10) nach einem der Ansprüche 2 oder 3, **dadurch gekennzeichnet, dass** die Nasen (56A, 56B) in einer gemeinsamen Ebene (P3) angeordnet sind, die zur Außenseite (32) der Scheibe (12) parallel und in der Nähe der freien Enden (42A, 42B) der Führungsachsen (40A, 40B) liegt, um die auf das freie Außenende (42A, 42B) jeder Führungsachse (40, 40B) ausgeübten Kräfte zu reduzieren.

5. Scheibenbremse (10) nach einem der Ansprüche 2 bis 4, **dadurch gekennzeichnet, dass** die Nasen (56A, 56B) in den Schienen (58A, 58B) mit einem Querspiel gleitend angebracht sind.

6. Scheibenbremse (10) nach dem vorhergehenden Anspruch, **dadurch gekennzeichnet, dass** jede Schiene (58A, 58B) Mittel (64) zum elastischen Rückstellen der zugeordneten Nase (56A, 56B) zu einer quer zentrierten Stellung bezüglich der Schiene (58A, 58B) aufweist.

7. Scheibenbremse (10) nach dem vorhergehenden Anspruch, **dadurch gekennzeichnet, dass** die elastischen Rückstellmittel elastische radiale Blattfeder (64) aufweisen, die zwischen der radialen Wand (60, 62) der Schiene (58A, 58B) und der zugeordneten Nase (56A, 56B) eingesetzt sind.

8. Scheibenbremse (10) nach dem vorhergehenden Anspruch, **dadurch gekennzeichnet, dass** die Bremsklötze (16, 18) bezüglich des festen Halters (14) über elastische, als axiale Schieber angeformte Blattfedern (24) verschiebbar geführt sind, und dass jedes elastische Rückstellmittel (64) mit dem zugeordneten Bremsklotzschieber (24) einstückig ausgebildet ist.
